# EUROPÄISCHE PATENTSCHRIFT

(11) **EP 0 641 726 B1**
(45) Veröffentlichungstag und Bekanntmachung des Hinweises auf die Patenterteilung: **05.02.1997**
(21) Anmeldenummer: 94113472.8
(22) Anmeldetag: 30.08.1994
(51) Int. Cl.: B65D 77/06, A47J 41/02

(54) **Vorrichtung zum Bereithalten und Abgeben von heissen oder kalten Getränken**
Device for keeping and dispensing of hot and cold beverages
Dispositif pour tenir à disposition et distribuer des boissons chaudes et froides

(30) Priorität: 04.09.1993 DE 4330005
(43) Veröffentlichungstag der Anmeldung: 08.03.1995
(73) Patentinhaber: Kraft Jacobs Suchard SA, CH-8034 Zürich (CH)
(72) Erfinder: Heilmann, Wolfgang, Dr., D-28355 Bremen (DE); Kurtzahn, Frithjof, D-28844 Weyhe-Leeste (DE)
(74) Vertreter: Bolte, Erich, Dipl.-Ing.

(56) Entgegenhaltungen:
- EP-A- 0 440 031
- EP-A- 0 484 712
- DE-A- 2 723 392
- DE-A- 4 035 724
- DE-U- 1 730 427

## Beschreibung

Die Erfindung betrifft eine Vorrichtung zum Bereithalten und Abgeben von heißen oder kalten Getränken, insbesondere Kaffee-Getränken, mit folgenden Merkmalen:
a) in einem ein Oberteil und ein Unterteil aufweisenden Isolierbehälter ist ein Isoliereinsatz angeordnet, der in einem Bereich halbkugelförmig und in einem hieran anschließenden Bereich zylindrisch und insbesondere als Vakuum-Hohlkörper aus Glas oder dergleichen ausgebildet ist,
b) im Isoliereinsatz ist ein beutelartiger, dichter Innenbehälter aus dünnem, flexiblem und zusammenlegbarem Material zur Aufnahme von Flüssigkeit auswechselbar angeordnet,
c) der Innenbehälter weist zum Füllen und/oder zur Entnahme der Flüssigkeit ein Schlauchstück auf, das aus dem Isolierbehälter herausführt.

Für die Aufbewahrung von Heißgetränken über einen längeren Zeitraum sind derartige Isolierbehälter durchaus geeignet. So ist es aus der DE-A-40 35 724 bekannt, innerhalb des Isolierbehälters einen beutelartigen, gasdichten Innenbehälter aus zusammenlegbarem Material anzuordnen, der zur Aufnahme von Flüssigkeit dient und zur Entnahme der Flüssigkeit eine entsprechende Schlauchleitung aufweist.

Der Erfindung liegt die Aufgabe zugrunde, eine Vorrichtung der eingangs genannten Art hinsichtlich der Handhabung zu verbessern. Zur Lösung dieser Aufgabe ist die erfindungsgemäße Vorrichtung durch folgende Merkmale gekennzeichnet:
d) das Unterteil weist einen Standfuß und einen Sockel zur Aufnahme des Oberteils und des hierin angeordneten Isoliereinsatzes auf,
e) der Sockel weist einen an den Innendurchmesser des zylindrischen Teils angepaßten umlaufenden Rand auf, der den nach unten offenen, zylindrischen Teil des Isoliereinsatzes aufnimmt, derart, daß ein unterer Randbereich des Isoliereinsatzes formschlüssitg und dichtend am Rand des Sockels anliegt,
f) der Sockel weist einen Kanal auf, durch den das Schlauchstück hindurchgeführt ist.

Das Oberteil ist leicht von dem Unterteil abnehmbar. Das Oberteil bzw. der Isoliereinsatz sind mit einer nach unten gerichteten Öffnung auf den Sockel aufsetzbar. Der Isolierbehälter ist insgesamt gut handhabbar und auf einfache Weise transportierbar und aufstellbar.

Besonders vorteilhaft ist es, wenn der Isoliereinsatz des Oberteils außen von wärmeisolierendem Schaumstoff, z. B. aus Polyurethan, umgeben ist. Durch das Zusammenwirken des Vakuums im Isoliereinsatz und des Schaumstoffs ist eine optimale Wärmeisolierung gegeben. Gleichzeitig ist der aus Glas bestehende Isoliereinsatz durch den Schaumstoff vor Beschädigungen geschützt. Ein so ausgebildetes Oberteil ist auch hinsichtlich der Handhabbarkeit weiter verbessert.

Weitere Merkmale der Erfindung ergeben sich aus den Unteransprüchen. Ein Ausführungsbeispiel der Erfindung wird im folgenden anhand von Zeichnungen näher erläutert. Es zeigen:
- Fig. 1: eine erfindungsgemäße Vorrichtung in einer seitlichen Draufsicht,
- Fig. 2: die Vorrichtung gemäß Fig. 1 im Vertikalschnitt,
- Fig. 3: die Vorrichtung gemäß den Fig. 1, 2 in einer vertikal auseinandergezogenen Darstellung,
- Fig. 4, 5: ein Organ zum Abklemmen einer Schlauchleitung für die Vorrichtung gemäß den Fig. 1 bis 3 in aufgeklappter Darstellung,
- Fig. 6, 7: ein Detail aus der Fig. 4 in verschiedenen Stellungen.

Das in den Zeichnungen dargestellte Ausführungsbeispiel betrifft einen Behälter zur Lagerung und Abgabe von insbesondere frisch aufgebrühten, heißen Kaffeegetränken. Die Behältereinheit besteht jeweils aus einem Außenbehälter, nämlich einem Isolierbehälter 10, und einem in diesem angeordneten Innenbehälter 11.

Der Isolierbehälter 10 besteht aus einem Unterteil 12 und einem Oberteil 13. Dabei ist das Oberteil 13 von dem Unterteil 12 abnehmbar. Hierdurch ist der Innenbehälter 11 zugänglich, z. B. zum Auswechseln oder Reinigen desselben.

Das Oberteil 13 ist hauben- oder glockenartig ausgebildet. Im Inneren weist das Oberteil 13 einen unteren zylindrischen Teil 66 und einen oberen halbkugelförmigen Teil 67 auf und ist nach unten offen. Weiterhin weist das Oberteil 13 einen Isoliereinsatz 14 auf. Dieser ist aus einem besonders gut isolierendem Material gebildet. Vorzugsweise besteht der Isoliereinsatz 14 aus Glas und ist doppelwandig ausgebildet mit einem (Fast-)Vakuum zwischen den Wandungen. Derartige Einsätze sind dem Prinzip nach aus Thermoskannen bekannt.

Der Isoliereinsatz 14 ist von einer stabilisierenden Umhüllung, nämlich einer Isolierschicht 15 umgeben. Diese hat in erster Linie die Aufgabe, den Isoliereinsatz 14 vor Beschädigung zu schützen. Vorzugsweise besteht die Isolierschicht 15 ebenfalls aus isolierendem Material, insbesondere einem Schaumstoff aus z. b. Polyurethan. Durch die Isolierschicht 15 erhält der Oberteil 13 einen runden, quadratischen oder auch rechteckigen Querschnitt.

Das Unterteil 12 weist einen Sockel 64 auf, der teilweise in das nach unten offene Oberteil 13 ragt. An seiner Oberseite weist der Sockel 64 eine konkave Mulde 16 sowie einen umlaufenden Rand 17 mit einer im wesentlichen vertikal gerichteten Umfangsfläche 17a auf. Der Durchmesser des Oberteils 13 ist innen (Isoliereinsatz 14) so bemessen, daß diese auf den Rand 17 unter Überdeckung desselben aufsetzbar ist. In der gezeigten Ausführungsform liegt ein unterer Randbereich 18 des Isoliereinsatzes 14 bzw. des zylindrischen Teils 66 desselben nahezu dichtend an dem umlaufenden Rand 17 an. Zur Unterstützung hierzu weist der Rand 17 ein Dichtmittel auf in Gestalt einer umlaufenden Nut 19 mit einem darin eingelegten Dichtring 20. Letzterer verhindert ein Entweichen von Luft aus dem Inneren des Isolierbehälters 10.

Zumindest der Sockel 64, vorzugsweise aber das gesamte Unterteil 12 ist aus einem gut isolierenden Werkstoff hergestellt. Im vorliegenden Fall ist das Unterteil als ein einstückiges Formstück ausgebildet. Das Unterteil 12 ist dabei aus einem Schaumstoff, z. B. aus Polyurethan hergestellt und weist einen zum Oberteil korrespondierenden runden, quadratischen oder rechteckigen Querschnitt auf.

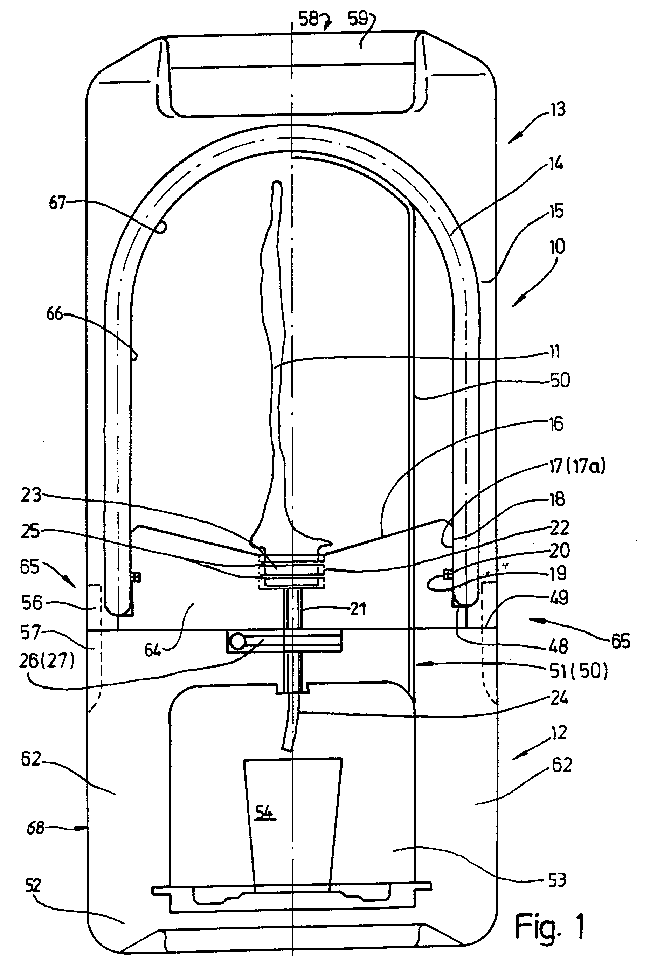

Die aufzunehmende Flüssigkeit bzw. das heiße Getränk wird in den Innenbehälter 11 eingefüllt. Dieser besteht aus einer luft- bzw. gasdichten - und natürlich flüssigkeitsdichten - Folie, insbesondere aus einem Laminat mit einer Metallschicht. Der Innenbehälter 11 ist flexibel und in entleertem Zustand flach zusammenlegbar. Dabei liegen Wandungen des Innenbehälters 11 ohne Einschluß von Luft aneinander (Fig. 1) . In gefülltem Zustand (nicht gezeigt) wird der Innenbehälter 11 vollständig durch die Flüssigkeit ausgefüllt, also ebenfalls ohne Lufteinschluß. Gleiches gilt bei Teilfüllungen, etwa nach einer teilweisen Entleerung des Innenbehälters 11. Auch dann befindet sich in diesem keine Luft.

Von der tiefsten Stelle der konkaven Mulde 16 ausgehend ist im Unterteil 12 eine Bohrung, Durchführung oder ein Kanal 21 vertikal angeordnet. In seinem oberen Abschnitt - nahe der Mulde 16 - weist der Kanal einen größeren Durchmesser in Form einer Vertiefung 22 auf. Der Innenbehälter 11 sitzt mit einem Anschlußstutzen 23 in der Vertiefung 22. Ein an den Anschlußstutzen 23 anschließendes Schlauchstück 24 ist durch den Kanal 21 hindurchgeführt und steht mit einem Stück aus diesem nach unten heraus. Zum Ausgleich von Toleranzen und zur Wärmeisolierung liegt der Anschlußstutzen 23 nicht am Innenumfang der Vertiefung 22 an. Vielmehr weist der Anschlußstutzen 23 umlaufende, ringförmige Stege 25 auf, die den Stutzen dichtend in der Vertiefung 22 halten.

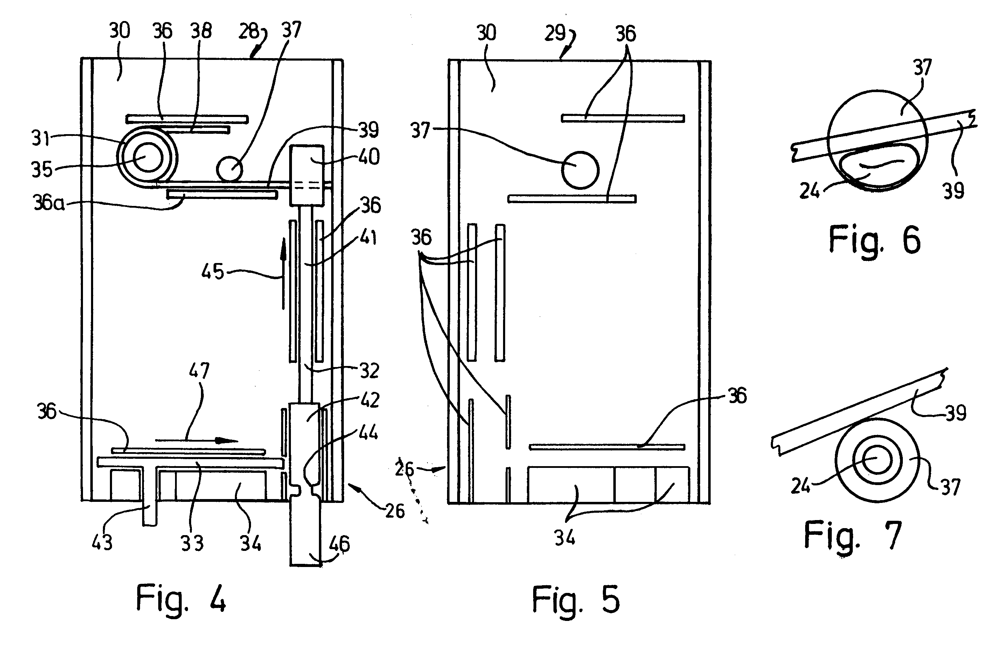

Das Schlauchstück 24 und der Anschlußstutzen 23 weisen keinerlei Ventil oder Verschlußorgan auf. Statt dessen ist im Unterteil 12 ein Organ 26 zum Abklemmen der Schlauchleitung 24 angeordnet. Zur Aufnahme des Organs weist der Sockel 64 an seiner Vorderseite eine zum Kanal 21 quergerichtete Einschuböffnung 27 auf. Das Abklemmorgan 26 ist als Einschub quaderförmig ausgebildet und in den Fig. 4, 5 mit zwei Hälften 28, 29 aufgeklappt dargestellt. Eine vorzugsweise aus wärmeisolierendem Kunststoff gegossene Grundplatte 30 ist zur Aufnahme einer Feder 31, einer Kolbenstange 32 und eines Schiebers 33 mit entsprechenden Erhebungen 34, Zapfen 35 und Führungsstegen 36 versehen. Hierzu korrespondierende Erhebungen, Zapfen und Führungsstege weist auch die andere Hälfte 29 auf einer entsprechenden Grundplatte 30 auf. In beiden Grundplatten ist je eine Öffnung 37 angeordnet, die bei in das Unterteil 12 eingesetztem Abklemmorgan 26 mit dem Kanal 21 fluchtend zu liegen kommen. Entsprechend erstreckt sich das Schlauchstück 24 durch die Öffnungen 37 hindurch.

Letztere sind in den Fig. 6, 7 als Detail dargestellt. Die Feder 31 sitzt auf dem Zapfen 35. Ein kürzerer Federbügel 38 stützt sich an einem der Führungsstege 36 ab, während ein längerer Federbügel 39 etwa tangential zur Öffnung 37 verläuft, an einem zum eben genannten Führungssteg parallelen Führungssteg 36a anliegt und mittels der Kolbenstange 32 über die Öffnung 37 bewegbar ist. Hierzu ist die Kolbenstange 32 quer zum Federbügel 39a angeordnet mit einem geschlitzten Kopf 40 zur Aufnahme desselben, einem hieran anschließenden stangenförmigen Mittelteil 41 und einem daran anschließenden kolbenförmigen zylindrischen Ende 42. Quer zur Kolbenstange 32 ist der Schieber 33 angeordnet. Dieser ist in seiner Längsrichtung und über ein Griffteil 43 axial verschiebbar gehalten. Das Ende 42 weist eine umlaufende Einschnürung 44 auf, in der der Schieber 33 passend arretierbar ist.

Fig. 4 zeigt die Elemente 31, 32, 33 in einer Grundstellung, beispielsweise nach einer Entnahme des Innenbehälters 11. Zum Einführen des Schlauchstücks 24 in den Kanal 21 wird die Kolbenstange 32 axial, das heißt in Richtung des Pfeils 45, bewegt. Hierzu steht das Ende 42 mit einem Griffteil 46 über die Grundplatte 30 hinaus. Sobald der längere Federbügel 39 in der Position gemäß Fig. 7 steht, wird der Schieber 33 in die Einschnürung 44 bewegt (Pfeil 47), so daß die Kolbenstange 32 arretiert ist. Das Schlauchstück 24 ist dann durch den Kanal 21 und ebenso durch die Öffnungen 37 hindurchführbar bis zum Austritt aus dem Unterteil 12. Zum Einfüllen der Flüssigkeit in den Innenbehälter 11 bleibt der längere Federbügel 39 in der Position gemäß Fig. 7. Nach dem Einfüllen wird der Schieber 33 zurückbewegt. Entsprechend löst sich die Kolbenstange 32, und der Federbügel 39 klemmt das Schlauchstück 24 wirksam ab, siehe Fig. 6. Zur Entnahme einer kleineren Flüssigkeitsmenge wird der längere Federbügel 39 durch Druck auf das Griffteil 46 kurzzeitig gelockert. Die Entnahme erfolgt sozusagen auf Knopfdruck. Für eine längere Entnahme kann auch der Schieber 33, wie zuvor beschrieben, eingerastet werden. Die beiden Hälften 28, 29 bzw. Grundplatten 30 sind vorzugsweise lösbar, etwa durch eine Schraub- oder Schnappverbindung, miteinander verbunden (nicht gezeigt).

Es hat sich gezeigt, daß gerade die eben beschriebene Ausführungsform besonders vorteilhaft hinsichtlich eines nur geringen Wärmeverlustes ist. Das Abklemmorgan 26 ist in der unteren Hälfte bzw. im unteren Drittel des Kanals 21 in den Sockel 64 mit Abstand zum Innenbehälter 11 bzw. zur Aufweitung 22 integriert und demnach nicht dem Innenbehälter 11 zugeordnet. Der Abstand zum Innenbehälter 11 und damit die Stärke der Isolierung desselben gegen das Abklemmorgan 26 sind so gewählt, daß der Wärmeverlust über das Abklemmorgan minimal bleibt. Entsprechend sind keine größeren Wärmebrücken zum Austritt der Wärme nach außen vorhanden. Die einzige Wärmebrücke ist der Kanal 21 mit dem Schlauchstück 24. Dieses weist jedoch nur einen geringen Querschnitt auf, so daß der Wärmeabfluß hierüber vernachlässigbar gering ist. Vorzugsweise ist das Schlauchstück 24 aus einem flexiblen, geschmacksneutralen und zugleich wärmeisolierenden Werkstoff hergestellt.

Zur Wärmeisolierung trägt weiterhin eine besondere Gestaltung im Bereich des Übergangs zwischen dem Oberteil 13 und dem Unterteil 12 bzw. dem Sockel 64 bei. Unterhalb des Dichtungsrings 20 ist das Unterteil 12 im Querschnitt stufenförmig ausgebildet, mit einer ersten Stufe 48 (von innen nach außen), auf der der Isoliereinsatz 14 aufsitzt und mit einer zweiten Stufe 49, auf der das Oberteil 13 im übrigen, insbesondere mit der isolierenden Schicht 15 aufsitzt.

Beim Befüllen des Innenbehälters 11 muß das unter dem Oberteil 13 vorhandene Luftvolumen veränderbar sein. Hierzu ist eine Belüftung in Form einer Luftleitung 50 vorgesehen. Diese verläuft in vertikaler Richtung am Rand der Mulde 16, durch diese bzw. den Sockel 64 vertikal hindurchgehend bis zum höchsten Punkt im Innern des Oberteils 13. Innerhalb des Oberteils 13 ist die Luftleitung 50 an dem Isoliereinsatz 14 entlang geführt. Als Luftleitung 50 kann ein Schlauch aus festem Material vorgesehen sein. Das Unterteil 12 weist zum Durchtritt der Luftleitung 50 eine entsprechende Bohrung 51 auf. Da sich die Luftleitung bis in den oberen Bereich des Oberteils 13 erstreckt, kann keine warme Luft durch Thermik austreten.

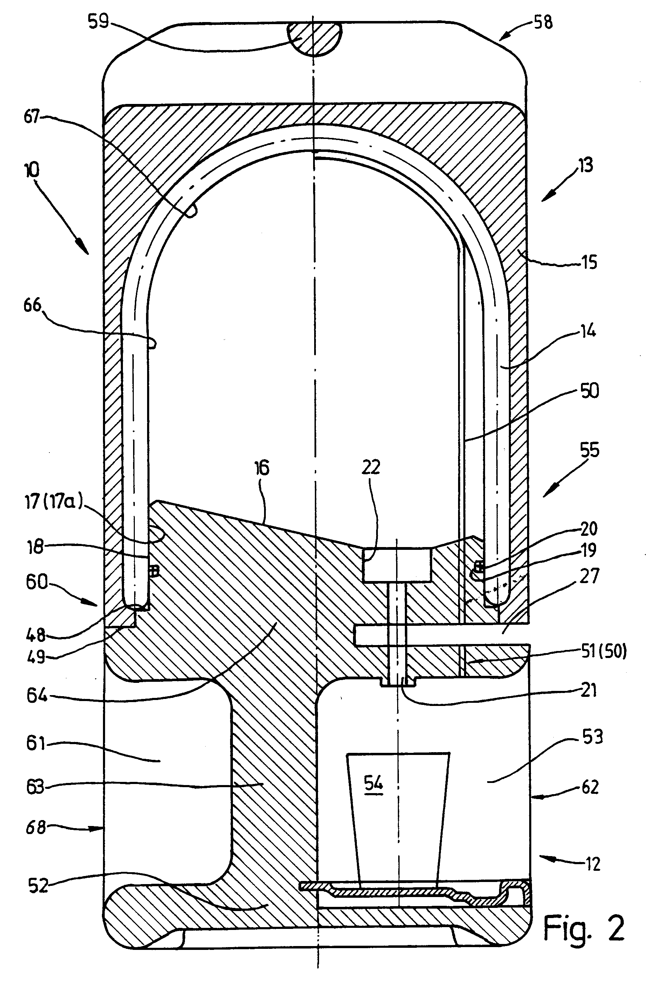

Ein unterer Teil 68 des Unterteils 12 ist mit einem integrierten Standfuß 52 ausgebildet und weist zugleich eine größere seitliche Öffnung 53 auf, in die ein Becher 54 oder dergleichen zur Entnahme des Getränks einstellbar ist. Der Kanal 21 erstreckt sich vertikal in die Öffnung 53 hinein, ebenso die Bohrung 51. Entsprechend der seitlichen Anordnung der Öffnung 53 ist die tiefste Stelle der Mulde 16 bzw. die Vertiefung 22 zur Vorderseite 55 (Öffnung 53) des Isolierbehälters 10 hin versetzt angeordnet (vgl. Fig. 2). Die Luftleitung 50 bzw. die hierfür vorgesehene Bohrung 51 erstreckt sich ebenfalls von oben durch den Sockel 64 des Unterteils 12 hindurch in die Öffnung 53 hinein und ist damit optisch verdeckt angeordnet.

Die Befüllung des Innenbehälters 11 kann über eine einfache Steckverbindung zwischen dem Schlauchstück 24 und einer nicht gezeigten Zufuhrleitung erfolgen, und zwar bei aus dem Kanal 21 herausragenden Schlauchstück 24 (Fig. 1).

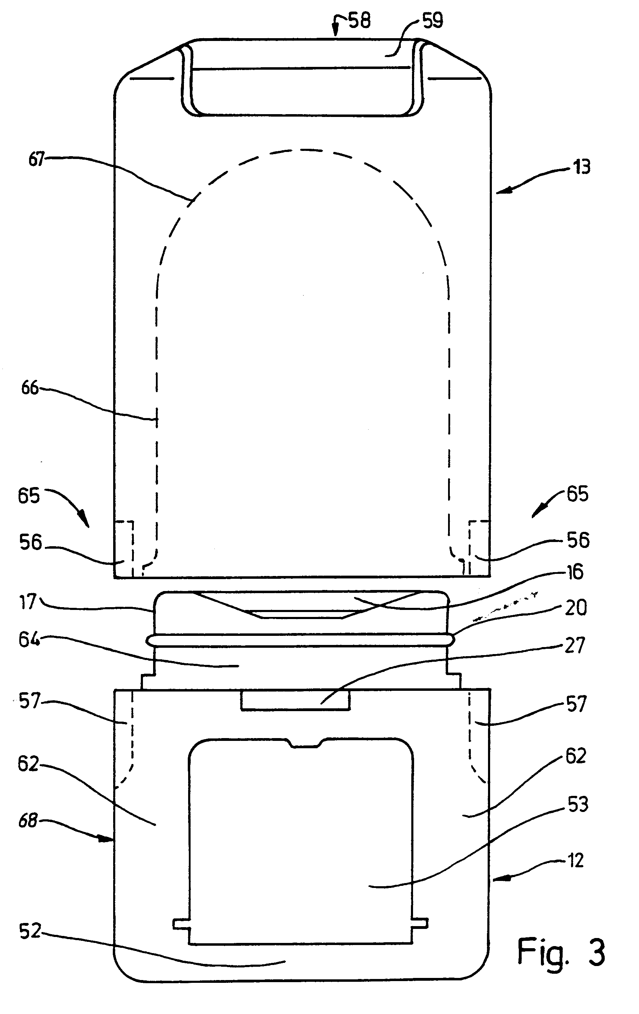

Das Unterteil 12 und das Oberteil 13 sind in der Fig. 3 auseinandergezogen dargestellt. Beide Teile sind gegeneinander mit geeigneten Verschlüssen arretierbar. Derartige Verschlüsse sind bekannt, brauchen nicht näher beschrieben zu werden und können etwa in seitlichen Ausnehmungen 56, 57 (Seitenwände 65) angeordnet sein. Das Oberteil 13 ist an ihrer Oberseite 58 mit einem in diese integrierten Handgriff 59 versehen. Der gesamte Isolierbehälter 10 ist so auf einfachste Weise transportierbar und aufstellbar.

Das Unterteil 12 ist aus Gewichtsgründen nicht nur im Bereich der Vorderseite 55 mit der Öffnung 53 versehen. Zusätzlich ist auf einer Rückseite 60 eine Öffnung oder ein Hohlraum 61 vorgesehen. Insgesamt besteht das Unterteil 12 aus einem flächigen Standfuß 52, hierzu aufrechten seitlichen Wangen 62 sowie einer zwischen den Wangen angeordneten Zwischenwand 63 und dem auf Wangen und Zwischenwand ruhenden Sockel 64. Die Oberseite des letzteren ist zugleich die Mulde 16. Die Zwischenwand 63 sowie die Wangen 62 begrenzen jeweils die Öffnungen 53 und 61.

## Patentansprüche

1. Vorrichtung zum Bereithalten und Abgeben von heißen oder kalten Getränken, insbesondere Kaffee-Getränken, mit folgenden Merkmalen:
a) in einem ein Oberteil (13) und ein Unterteil (12) aufweisenden Isolierbehälter (10) ist ein Isoliereinsatz (14) angeordnet, der in einem Bereich halbkugelförmig (Teil 67), in einem hieran anschließenden Bereich zylindrisch (Teil 66) und insbesondere als Vakuum-Hohlkörper aus Glas oder dergleichen ausgebildet ist,
b) im Isoliereinsatz (14) ist ein beutelartiger, dichter Innenbehälter (11) aus dünnem, flexiblem und zusammenlegbarem Material zur Aufnahme von Flüssigkeit auswechselbar angeordnet,
c) der Innenbehälter (11) weist zum Füllen und/oder zur Entnahme der Flüssigkeit ein Schlauchstück (24) auf, das aus dem Isolierbehälter (10) herausführt,
**gekennzeichnet durch** folgende Merkmale:
d) das Unterteil (12) weist einen Standfuß (52) und einen Sockel (64) zur Aufnahme des Oberteils (13) und des hierin angeordneten Isoliereinsatzes auf,
e) der Sockel (64) weist einen an den Innendurchmesser des zylindrischen Teils (66) angepaßten umlaufenden Rand (17) auf, der den nach unten offenen, zylindrischen Teil des Isoliereinsatzes (14) aufnimmt, derart, daß ein unterer Randbereich (18) des Isoliereinsatzes (14) formschlüssig und dichtend am Rand (17) des Sockels (64) anliegt,
f) der Sockel (64) weist einen Kanal (21) auf, durch den das Schlauchstück (24) hindurchgeführt ist.

2. Vorrichtung nach Anspruch 1, dadurch gekennzeichnet, daß der Innenbehälter (11) einen Anschlußstutzen (23) zum Füllen und Entleeren des Innenbehälters (11) aufweist, insbesondere in Verbindung mit dem Schlauchstück (24), und daß der Sockel (64) eine Bodenfläche (16) bildet mit einer Vertiefung (22), in die der Anschlußstutzen (23) des Innenbehälters (11) passend einsetzbar ist.

3. Vorrichtung nach Anspruch 1 oder 2, dadurch gekennzeichnet, daß an die Vertiefung (22) der Kanal (21) anschließt, wobei dieser durch den Sockel (64) hindurchgeführt ist und oberhalb einer Standfläche für ein Gefäß zur Aufnahme einer Portion des Getränks im unteren Teil (68) des Unterteils (12) mündet, und zwar im Bereich einer seitlichen Öffnung (53) des Unterteils (12).

4. Vorrichtung nach Anspruch 1 oder einem der weiteren Ansprüche, dadurch gekennzeichnet, daß wenigstens der Sockel (64), vorzugsweise das Unterteil (12) insgesamt ein Formstück aus wärmeisolierendem Werkstoff, insbesondere aus Schaumstoff (geschäumtem Kunststoff), vorzugsweise aus Polyurethan, ist.

5. Vorrichtung nach Anspruch 1 oder einem der weiteren Ansprüche, dadurch gekennzeichnet, daß der Isoliereinsatz (14) des Oberteils (13) außen von wärmeisolierendem Werkstoff umgeben ist, insbesondere von an dem Isoliereinsatz (14) außen anliegendem Schaumstoff (Schaumkunststoff), vorzugsweise aus Polyurethan, insbesondere derart, daß die Außenkontur des Oberteils (13) aus wärmeisolierendem Werkstoff hergestellt ist und mit der Außenkontur des Sockels bzw. des Unterteils bündig abschließt.

6. Vorrichtung nach Anspruch 1 oder einem der weiteren Ansprüche, gekennzeichnet durch eine Luftleitung (50) zum Be- und Entlüften des Oberteils (13) nach Maßgabe des Füllgrades des Innenbehälters (11), wobei die Luftleitung (50) in aufrechter Richtung durch den Sockel (64) hindurch an einer Innenwandung des Oberteils (13) bzw. des Isoliereinsatzes (14) entlang bis zum oberen Bereich (Teil 67) geführt ist.

7. Vorrichtung nach Anspruch 1 oder einem der weiteren Ansprüche, dadurch gekennzeichnet, daß der Sockel (64) ein Organ (26) zum Abklemmen des Schlauchstücks (24) aufweist, insbesondere eine manuell betätigbare Feder (31) mit einem quer zum Schlauchstück (24) bewegbaren Federbügel (39), wobei das Schlauchstück (24) durch die Feder (31) vorzugsweise ständig verschlossen ist und der Federbügel (39) zum Öffnen des Schlauchstücks (24) quer zu letzterem bewegbar ist.

## Claims

1. Apparatus for storing and dispensing hot or cold drinks, in particular coffee drinks, having the following features:
a) arranged in an insulating container (10), which has an upper section (13) and a lower section (12), is an insulating insert (14) which is designed in the form of a hemisphere (part 67) in one region and is designed cylindrically (part 66) in an adjoining region, and is designed, in particular, as a hollow vacuum body made of glass or the like,
b) a bag-like, sealed inner container (11) which consists of a thin, flexible and collapsible material which is intended for receiving liquid is arranged in an exchangeable manner in the insulating insert (14),
c) for introducing and/or for removing the liquid, the inner container (11) has a tube piece (24) which runs out of the insulating container (10),
characterized by the following features:
d) the lower section (12) has a stand (52) and a base (64) for receiving the upper section (13) and the insulating insert arranged therein,
e) the base (64) has a peripheral border (17) which is adapted to the internal diameter of the cylindrical part (66) and receives the downwardly open, cylindrical part of the insulating insert (14) such that a lower border region (18) of the insulating insert (14) rests against the border (17) of the base (64) in a positively locking and sealing manner,
f) the base (64) has a duct (21) through which the tube piece (24) is routed.

2. Apparatus according to Claim 1, characterized in that the inner container (11) has a connection stub (23) for filling and emptying the inner container (11), in particular in conjunction with the tube piece (24), and in that the base (64) forms a bottom surface (16) with a depression (22) into which the connection stub (23) of the inner container (11) can be fitted.

3. Apparatus according to Claim 1 or 2, characterized in that the depression (22) is adjoined by the duct (21), the latter being routed through the base (64) and opening above a standing surface for a vessel for receiving a quantity of the drink, in the lower part (68) of the lower section (12), to be precise in the region of a lateral opening (53) of the lower section (12).

4. Apparatus according to Claim 1 or one of the further claims, characterized in that at least the base (64), preferably the lower section (12) as a whole, is a moulding consisting of thermally insulating material, in particular of foam material (foamed plastic), preferably of polyurethane.

5. Apparatus according to Claim 1 or one of the further claims, characterized in that the insulating insert (14) of the upper section (13) is enclosed on the outside by thermally insulating material, in particular by foam material (foamed plastic), preferably polyurethane, which rests against the outside of the insulating insert (14), in particular such that the outer contour of the upper section (13) is produced from thermally insulating material and terminates flush with the outer contour of the base or of the lower section.

6. Apparatus according to Claim 1 or one of the further claims, characterized by an air line (50) for admitting air to, and extracting it from, the upper section (13) in accordance with the filling level of the inner container (11), the air line (50) being routed through the base (64) vertically along an inner wall of the upper section (13) or of the insulating insert (14) as far as the upper region (part 67).

7. Apparatus according to Claim 1 or one of the further claims, characterized in that the base (64) has a member (26) for pinching the tube piece (24), in particular a manually actuable spring (31) with a spring clip (39) which can be moved transversely with respect to the tube piece (24), the tube piece (24) preferably being closed at all times by the spring (31), and it being possible for the spring clip (39) to be moved transversely with respect to the tube piece (24) in order to open the latter.

## Revendications

1. Appareil pour tenir prêtes et délivrer des boissons chaudes ou froides, en particulier des boissons au café, ayant les caractéristiques suivantes :
a) dans un récipient isolant (10) présentant une partie supérieure (13) et une partie inférieure (12) est placé un élément isolant (14) qui est hémisphérique dans une zone (partie 67) et cylindrique dans une zone contiguë (partie 66) et constitué en particulier d'un corps creux sous vide en verte ou matière semblable,
b) dans l'élément isolant (14) est placé, changeable, un récipient intérieur étanche du genre sac (11) en matière mince, souple et pliable destiné à recevoir du liquide,
c) le récipient intérieur (11) présente pour son remplissage de liquide et/ou son vidage un morceau de tuyau souple (24) qui sort du récipient isolant (10),
caractérisé par les caractéristiques suivantes :
d) la partie inférieure (12) présente un pied (52) et un socle (64) destinés à recevoir la partie supérieure (13) et l'élément isolant placé dans celle-ci,
e) le socle (64) présente un bord périphérique (17) adapté au diamètre intérieur de la partie cylindrique (66) de l'élément isolant (14) et recevant cette partie cylindrique, ouverte en bas, de façon telle qu'une zone de bord inférieure (18) de l'élément isolant (14) s'appuie par emboîtement et de manière étanche sur le bord (17) du socle (64),
f) le socle (64) présente un canal (21) par lequel passe le morceau de tuyau souple (24).

2. Appareil selon la revendication 1, caractérisé par le fait que le récipient intérieur (11) présente une tubulure de raccordement (23) pour le remplissage et le vidage de celui-ci, en particulier en liaison avec le morceau de tuyau souple (24), et que le socle (64) forme une surface de fond (16) ayant un creux (22) dans lequel peut être introduite de manière ajustée la tubulure de raccordement (23) du récipient intérieur (11).

3. Appareil selon l'une des revendications 1 et 2, caractérisé par le fait que le canal (21) part du creux (22), traverse le socle (64) et débouche, au-dessus d'une surface de pose d'un récipient destiné à recevoir une portion de la boisson, dans la partie inférieure (68) de la partie inférieure (12) et précisément dans la zone d'une ouverture latérale (53) de la partie inférieure (12).

4. Appareil selon la revendication 1 ou une des autres revendications, caractérisé par le fait qu'au moins le socle (64), de préférence la partie inférieure (12) entière, est une pièce moulée en matériau isolant thermique, en particulier en matière alvéolaire (plastique alvéolaire), de préférence en polyuréthane.

5. Appareil selon la revendication 1 ou une des autres revendications, caractérisé par le fait que l'élément isolant (14) de la partie supérieure (13) est entouré extérieurement de matériau isolant thermique, en particulier de matière alvéolaire (plastique alvéolaire) appliquée extérieurement contre lui, de préférence de polyuréthane, en particulier de façon telle que le contour extérieur de la partie supérieure (13) soit en matériau isolant thermique et se termine à fleur du contour extérieur du socle ou de la partie inférieure.

6. Appareil selon la revendication 1 ou une des autres revendications, caractérisé par une conduite d'air (50) pour l'amenée d'air à la partie supérieure (13) et l'évacuation d'air de celle-ci en fonction du degré de remplissage du récipient intérieur (11), cette conduite d'air (50) traversant verticalement le socle (64) et allant jusqu'à la zone supérieure (partie 67) en longeant une paroi intérieure de la partie supérieure (13) ou de l'élément isolant (14).

7. Appareil selon la revendication 1 ou une des autres revendications, caractérisé par le fait que le socle (64) présente un organe (26) de pincement du morceau de tuyau souple (24), en particulier un ressort manoeuvrable manuellement (31) ayant un étrier élastique (39) mobile perpendiculairement au morceau de tuyau souple (24), le morceau de tuyau souple (24) étant de préférence fermé en permanence par le ressort (31) et l'étrier élastique (39) étant mobile perpendiculairement au morceau de tuyau souple (24) pour l'ouverture de celui-ci.
